# EUROPEAN PATENT APPLICATION

(11) **EP 3 828 774 A1**
(43) Date of publication of application: **02.06.2021**
(21) Application number: 20166130.3
(22) Date of filing: 27.03.2020
(51) Int. Cl.: G06N 3/04, G06N 3/08, G06N 20/20

(54) **METHOD, APPARATUS, ELECTRONIC DEVICE AND STORAGE MEDIUM FOR OBTAINING QUESTION-ANSWER READING COMPREHENSION MODEL**

(30) Priority: 28.11.2019 CN 201911189653
(71) Applicant: Baidu Online Network Technology (Beijing) Co., Ltd., Beijing 100085 (CN)
(72) Inventor: LI, Hongyu, Beijing, Beijing 100085 (CN); LIU, Jing, Beijing, Beijing 100085 (CN)
(74) Representative: dompatent von Kreisler Selting Werner - Partnerschaft von Patent- und Rechtsanwälten mbB

(57) **Abstract**

The present disclosure provides a method, apparatus, electronic device and storage medium for obtaining a question-answer reading comprehension model, and relates to the field of deep learning. The method may comprise: pre-training N models with different structures respectively with unsupervised training data to obtain N pre-trained models, different models respectively corresponding to different pre-training tasks, N being a positive integer greater than one; fine-tuning the pre-trained models with supervised training data by taking a question-answer reading comprehension task as a primary task and taking predetermined other natural language processing tasks as secondary tasks, respectively, to obtain N fine-tuned models; determining a final desired question-answer reading comprehension model according to the N fine-tuned models. The solution of the present disclosure may be applied to improve the generalization capability of the model and so on.

## Description

The present application claims the priority of Chinese Patent Application No. 201911189653.8, filed on November 28, 2019, with the title of "Method, apparatus, electronic device and storage medium for obtaining question-answer reading comprehension model". The disclosure of the above applications is incorporated herein by reference in its entirety.

### Field of the Disclosure

The present disclosure relates to computer application technologies, and particularly to a method, apparatus, electronic device and storage medium for obtaining a question-answer reading comprehension model.

### Background of the Disclosure

The question-answer reading comprehension technology refers to, given one or more paragraphs (P) and one question (Q), enabling a model to predict an answer (A) by a machine learning method.

The conventional question-answer reading comprehension models are mostly obtained in a pre-training-fine tuning manner, i.e., first select a model structure, then perform pre-training with a lot of unsupervised training data from a single source, and then use supervised training data to fine-tune on a single question-answer reading comprehension task, thereby obtaining a final desired question-answer reading comprehension model.

However, the model structure and training task in the above manner are single and make it impossible for the model to learn some universal features, thereby causing a weak generalization capability of the model.

### Summary of the Disclosure

In view of the above, the present disclosure provides a method, apparatus, electronic device and storage medium for obtaining a question-answer reading comprehension model.

A method for obtaining a question-answer reading comprehension model, comprising:
pre-training N models with different structures respectively with unsupervised training data to obtain N pre-trained models, different models respectively corresponding to different pre-training tasks, N being a positive integer greater than one;
fine-tuning the pre-trained models with supervised training data by taking a question-answer reading comprehension task as a primary task and taking predetermined other natural language processing tasks as secondary tasks, respectively, to obtain N fine-tuned models;
determining the question-answer reading comprehension model according to the N fine-tuned models.

According to a preferred embodiment of the present disclosure, the pre-training with unsupervised training data respectively comprises:
pre-training any model with unsupervised training data from at least two different predetermined fields, respectively.

According to a preferred embodiment of the present disclosure, the method further comprises:
for any pre-trained model, performing deep pre-training for the pre-trained model with unsupervised training data from at least one predetermined field according to a training task corresponding to the pre-trained model to obtain an enhanced pre-trained model;
wherein the unsupervised training data used upon the deep pre-training and the unsupervised training data used upon the pre-training come from different fields.

According to a preferred embodiment of the present disclosure, the fine-turning comprises:
for any pre-trained model, in each step of the fine-tuning, selecting a task from the primary task and the secondary tasks for training, and updating the model parameters;
wherein the primary task is selected more times than any of the secondary tasks.

According to a preferred embodiment of the present disclosure, the determining the question-answer reading comprehension model according to the N fine-tuned models comprises:
using a knowledge distillation technique to compress the N fine-tuned models into a single model, and taking the single model as the question-answer reading comprehension model.

An apparatus for obtaining a question-answer reading comprehension model, comprising: a first pre-training unit, a fine-tuning unit and a fusion unit;
the first pre-training unit is configured to pre-train N models with different structures respectively with unsupervised training data to obtain N pre-trained models, different models respectively corresponding to different pre-training tasks, N being a positive integer greater than one;
the fine-tuning unit is configured to fine-tune the pre-trained models with supervised training data by taking a question-answer reading comprehension task as a primary task and taking predetermined other natural language processing tasks as secondary tasks, respectively, to obtain N fine-tuned models;
the fusion unit is configured to determine the question-answer reading comprehension model according to the N fine-tuned models.

According to a preferred embodiment of the present disclosure, the first pre-training unit pre-trains any model with unsupervised training data from at least two different predetermined fields, respectively.

According to a preferred embodiment of the present disclosure, the apparatus further comprises: a second pre-training unit;
the second pre-training unit is configured to, for any pre-trained model, perform deep pre-training for the pre-trained model with unsupervised training data from at least one predetermined field according to a training task corresponding to the pre-trained model to obtain an enhanced pre-trained model; wherein the unsupervised training data used upon the deep pre-training and the unsupervised training data used upon the pre-training come from different fields.

According to a preferred embodiment of the present disclosure, for any pre-trained model, the fine-tuning unit, in each step of the fine-tuning, selects a task from the primary task and the secondary tasks for training, and updates the model parameters, wherein the primary task is selected more times than any of the secondary tasks.

According to a preferred embodiment of the present disclosure, the fusion unit uses a knowledge distillation technique to compress the N fine-tuned models into a single model, and takes the single model as the question-answer reading comprehension model.

An electronic device, comprising:
at least one processor; and
a memory communicatively connected with the at least one processor; wherein,
the memory stores instructions executable by the at least one processor, and the instructions are executed by the at least one processor to enable the at least one processor to perform a method as described above.

A non-transitory computer-readable storage medium storing computer instructions therein for causing the computer to perform the method as described above.

An embodiment in the present disclosure has the following advantages or beneficial effects: the problem about the singularity of model structure is avoided by employing models with different structures for pre-training. In the fine-tuning phase, in addition to the question-answer reading comprehension task, other natural language processing tasks are added as secondary tasks, which enriches the training tasks, uses more training data and thereby enables the finally-obtained question-answer reading comprehension model to learn more universal features and improves the generalization capability of the model; in addition, during the pre-training phase, unsupervised training data from different fields may be used to pre-train the model, thereby enriching the data sources and enhancing the field adaptability of the model. In addition, since the pre-training requires a large computational cost and time consumption, it is difficult for training data to fully cover all fields. To make up for the uncovered data fields in the pre-training phase, further deep pre-training may be performed for the pre-trained models purposefully in several fields, thereby further enhancing the adaptability of the model in these fields. Other effects of the above optional manners will be described hereunder with reference to specific embodiments.

### Brief Description of Drawings

The figures are intended to facilitate understanding the solutions, not to limit the present disclosure. In the figures,
Fig. 1 is a flow chart of a first embodiment of a method for obtaining a question-answer reading comprehension model according to the present disclosure;
Fig. 2 is a flow chart of a second embodiment of a method for obtaining a question-answer reading comprehension model according to the present disclosure;
Fig. 3 is a structural schematic diagram of an embodiment of an apparatus 300 for obtaining a question-answer reading comprehension model according to the present disclosure;
Fig. 4 is a block diagram of an electronic device for implementing the method according to embodiments of the present disclosure.

### Detailed Description of Preferred Embodiments

Exemplary embodiments of the present disclosure are described below with reference to the accompanying drawings, include various details of the embodiments of the present disclosure to facilitate understanding, and should be considered as merely exemplary. Therefore, those having ordinary skill in the art should recognize that various changes and modifications can be made to the embodiments described herein without departing from the scope and spirit of the application. Also, for the sake of clarity and conciseness, depictions of well-known functions and structures are omitted in the following description.

In addition, it should be appreciated that the term "and/or" used in the text herein is only an association relationship depicting associated objects and represents that three relations might exist, for example, A and/or B may represents three cases, namely, A exists individually, both A and B coexist, and B exists individually. In addition, the symbol "/" in the text generally indicates associated objects before and after the symbol are in an "or" relationship.

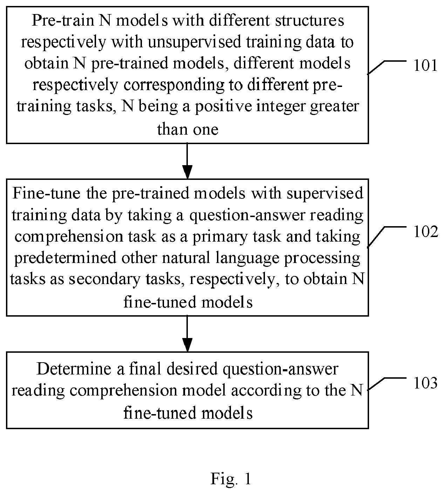

Fig. 1 is a flow chart of a first embodiment of a method for obtaining a question-answer reading comprehension model according to the present disclosure. As shown in Fig. 1, the following specific implementation mode is included.

At 101, N models with different structures are respectively pre-trained with unsupervised training data to obtain N pre-trained models, different models respectively corresponding to different pre-training tasks, N being a positive integer greater than one.

At 102, the pre-trained models are fine-tuned with supervised training data by taking a question-answer reading comprehension task as a primary task and taking predetermined other natural language processing tasks as secondary tasks, respectively, to obtain N fine-tuned models.

At 103, a final desired question-answer reading comprehension model is determined according to the N fine-tuned models.

In the present embodiment, in the pre-training phase, a plurality of models with different structures may be employed and include but not limited to: a BERT (Bidirectional Encoder Representations from Transformers) model, an XL-Net model and an ERNIE (Enhanced Representation from kNowledge IntEgration) model etc. The specific type of the N models with different structures may depend on actual needs. The specific value of N may also depend on actual needs.

Preferably, any model may be pre-trained with unsupervised training data from at least two different predetermined fields, respectively. The different predetermined fields may include, but are not limited to, network, textbook, novel, financial reports, etc., thereby enriching the data source and enhancing the field adaptability of the model.

Different models may respectively correspond to different pre-training tasks, and the pre-training tasks may include, but are not limited to, correlation prediction, language models, etc.

When pre-training is performed, for any model, parameters of the model may be first initialized randomly, and then the model is trained with corresponding unsupervised training data certain rounds according to corresponding pre-training tasks, thereby obtaining a plurality of pre-trained models. The specific implementation belongs to the prior art.

For example, the pre-training task corresponding to model a is pre-training task a, and the model a may be pre-trained with the unsupervised training data from field 1, field 2 and field 3 to obtain pre-trained model a; the pre-training task corresponding to model b is pre-training task b, and the model b may be pre-trained with the unsupervised training data from field 1, field 2 and field 3 to obtain pre-trained model b; the pre-training task corresponding to model c is pre-training task c, and the model c may be pre-trained with the unsupervised training data from field 1, field 2 and field 3 to obtain pre-trained model c; correspondingly, a total of three pre-trained models may be obtained.

Since the pre-training requires a large computational cost and time consumption, it is difficult for training data to fully cover all fields. To make up for the uncovered data fields in the pre-training phase, further deep pre-training may be performed for the pre-trained models purposefully in several fields, thereby further enhancing the adaptability of the model in these fields.

Correspondingly, for any pre-trained model, deep pre-training may be performed for the pre-trained model with unsupervised training data from at least one predetermined field according to a training task corresponding to the pre-trained model (namely, the corresponding pre-training task upon pre-training) to obtain an enhanced pre-trained model. The unsupervised training data used upon the deep pre-training and the unsupervised training data used upon the pre-training come from different fields.

For example, for pre-trained model a, the unsupervised training data used upon the pre-training comes from field 1, field 2 and field 3, and the unsupervised training data used upon the deep pre-training comes from field 4. The field 4 may be a field to which a finally-obtained question-answer reading comprehension model is to be applied. The pre-training phase needs a large amount of unsupervised training data. However, for some reason, sufficient unsupervised training data might not be obtained for field 4 for pre-training, whereas enough unsupervised training data can be obtained for field 1, field 2 and Field 3 for pre-training. Then, according to the above processing method, the model a can be pre-trained by using the unsupervised training data from field 1, field 2 and field 3 to obtain the pre-trained model a, and then deep pre-training is performed for the pre-trained model a by using the unsupervised training data from field 4 to obtain an enhanced pre-trained model a.

In the above manner, N enhanced pre-trained models can be obtained. In practical applications, any pre-trained model may be trained certain rounds by using the unsupervised training data from at least one predetermined field (e.g., the abovementioned field 4) according to the pre-training task to obtain the enhanced pre-trained model.

For N pre-trained models, they may be further fine-tuned. Preferably, the pre-trained models are fine-tuned with supervised training data by taking the question-answer reading comprehension task as a primary task and taking predetermined other natural language processing tasks as secondary tasks, respectively, to obtain N fine-tuned models.

The specific tasks included by the secondary tasks may depend on actual needs, for example, may include but not limited to a classification task, a matching task, and so on.

For any pre-trained model, in each step of the fine-tuning, a task may be randomly selected from the primary task and the secondary tasks for training, and the model parameters be updated. The primary task is selected more times than any secondary task.

The proportion of the number of times that the primary task and secondary tasks are selected may be preset. For example, it is assumed that there are a total of two secondary tasks, namely secondary task 1 and secondary task 2, respectively. The proportion of the number of times that the primary task, secondary task 1 and secondary task 2 are selected may be 5: 2: 3.

It can be seen that each step of fine-tuning corresponds to a task, and the training data used for different tasks will also be different.

After the fine-tuning process, N fine-tuned models may be obtained. Further, the final desired question-answer reading comprehension model may be determined according to the N fine-tuned models.

The N fine-tuned models obtained are question-answer reading comprehension models. In a conventional manner, a model integration manner is usually employed directly to average the output probabilities of the N fine-tuned models to obtain a final output. However, this will cause a low efficiency of the system and a higher consumption of hardware resources, and so on. To overcome these problems, it is proposed in the present embodiment to use a knowledge distillation technique to fuse the N fine-tuned models and compress them into a single model, and take the single model as the final desired question-answer reading comprehension model. The specific implementation of the knowledge distillation technique belongs to the prior art.

The obtained question-answer reading comprehension model may be used subsequently for question-answer reading comprehension.

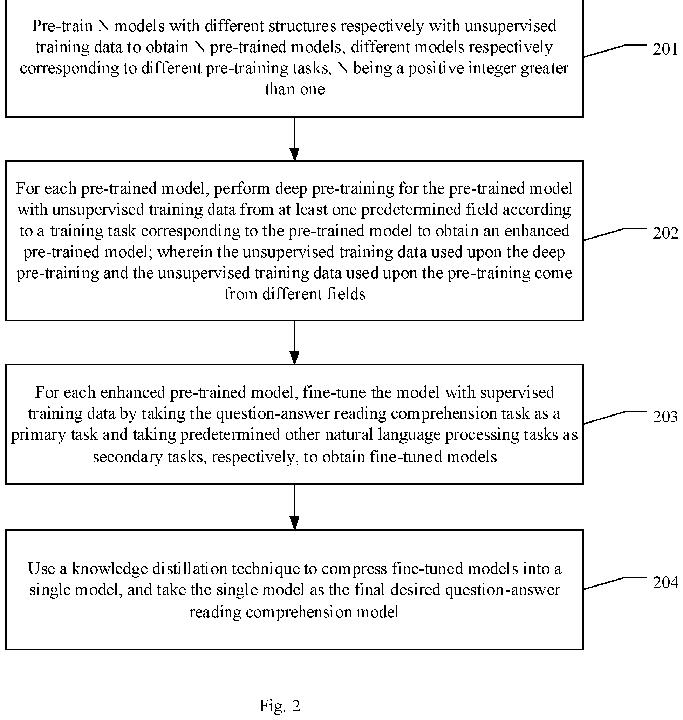

Based on the above introduction, Fig. 2 is a flow chart of a second embodiment of a method for obtaining a question-answer reading comprehension model according to the present disclosure. As shown in Fig. 2, the following specific implementation mode is included.

At 201, N models with different structures are respectively pre-trained with unsupervised training data to obtain N pre-trained models, different models respectively corresponding to different pre-training tasks, N being a positive integer greater than one.

Any model may be pre-trained with unsupervised training data from at least two different predetermined fields, respectively.

At 202, for each pre-trained model, deep pre-training may be performed for the pre-trained model with unsupervised training data from at least one predetermined field according to a training task corresponding to the pre-trained model to obtain an enhanced pre-trained model. The unsupervised training data used upon the deep pre-training and the unsupervised training data used upon the pre-training come from different fields.

At 203, for each enhanced pre-trained model, the model is fine-tuned with supervised training data by taking the question-answer reading comprehension task as a primary task and taking predetermined other natural language processing tasks as secondary tasks, respectively, to obtain fine-tuned models.

For each enhanced pre-trained model, in each step of the fine-tuning, a task may be randomly selected from the primary task and the secondary tasks for training, and the model parameters be updated. The primary task is selected more times than any secondary task.

At 204, a knowledge distillation technique is used to compress fine-tuned models into a single model, and the single model is taken as the final desired question-answer reading comprehension model.

As appreciated, for ease of description, the aforesaid method embodiments are all described as a combination of a series of actions, but those skilled in the art should appreciated that the present disclosure is not limited to the described order of actions because some steps may be performed in other orders or simultaneously according to the present disclosure. Secondly, those skilled in the art should appreciate the embodiments described in the description all belong to preferred embodiments, and the involved actions and modules are not necessarily requisite for the present disclosure.

In the above embodiments, different emphasis is placed on respective embodiments, and reference may be made to related depictions in other embodiments for portions not detailed in a certain embodiment.

To sum up, according to the solution of the method embodiment of the present disclosure, the problem about the singularity of model structure is avoided by employing models with different structures for pre-training. In the fine-tuning phase, in addition to the question-answer reading comprehension task, other natural language processing tasks are added as secondary tasks, which enriches the training tasks, uses more training data and thereby enables the finally-obtained question-answer reading comprehension model to learn more universal features and improves the generalization capability of the model; in addition, during the pre-training phase, unsupervised training data from different fields may be used to pre-train the model, thereby enriching the data sources and enhancing the field adaptability of the model. In addition, since the pre-training requires a large computational cost and time consumption, it is difficult for training data to fully cover all fields. To make up for the uncovered data fields in the pre-training phase, further deep pre-training may be performed for the pre-trained models purposefully in several fields, thereby further enhancing the adaptability of the model in these fields.

The above introduces the method embodiments. The solution of the present disclosure will be further described through an apparatus embodiment.

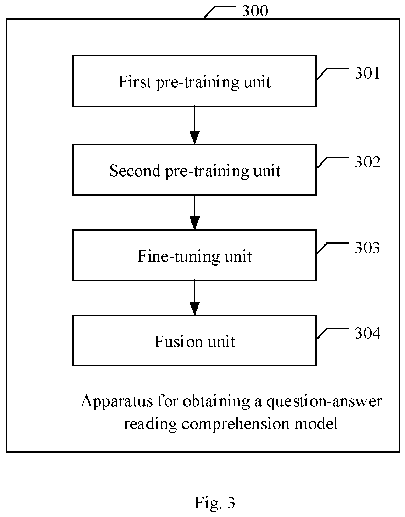

Fig. 3 is a structural schematic diagram of an embodiment of an apparatus 300 for obtaining a question-answer reading comprehension model according to the present disclosure. As shown in Fig. 3, the apparatus comprises: a first pre-training unit 301, a fine-tuning unit 303 and a fusion unit 304.

The first pre-training unit 301 is configured to pre-train N models with different structures respectively with unsupervised training data to obtain N pre-trained models, different models respectively corresponding to different pre-training tasks, N being a positive integer greater than one.

The fine-tuning unit 303 is configured to fine-tune the pre-trained models with supervised training data by taking a question-answer reading comprehension task as a primary task and taking predetermined other natural language processing tasks as secondary tasks, respectively, to obtain N fine-tuned models.

The fusion unit 304 is configured to determine a final desired question-answer reading comprehension model according to the N fine-tuned models.

A plurality of models with different structures may be employed in the present embodiment. The first pre-training unit 301 pre-trains any model with unsupervised training data from at least two different predetermined fields, respectively.

The different predetermined fields may include, but are not limited to, network, textbook, novel, financial reports, etc. Different models may respectively correspond to different pre-training tasks, and the pre-training tasks may include, but are not limited to, correlation prediction, language models, etc.

The apparatus shown in Fig. 3 further comprises: a second pre-training unit 302 configured to, for any pre-trained model, perform deep pre-training for the pre-trained model with unsupervised training data from at least one predetermined field according to a training task corresponding to the pre-trained model to obtain an enhanced pre-trained model. The unsupervised training data used upon the deep pre-training and the unsupervised training data used upon the pre-training come from different fields.

The fine-tuning unit 303 may fine-tune the obtained N pre-trained models, i.e., fine-tune the pre-trained models with supervised training data by taking the question-answer reading comprehension task as a primary task and taking predetermined other natural language processing tasks as secondary tasks, respectively, to obtain N fine-tuned models.

Preferably, for any pre-trained model, the fine-tuning unit 303 may, in each step of the fine-tuning, select a task from the primary task and the secondary tasks for training, and update the model parameters. The primary task is selected more times than any secondary task. The specific tasks included by the secondary tasks may depend on actual needs, for example, may include but not limited to a classification task, a matching task, etc.

Furthermore, the fusion unit 304 may use a knowledge distillation technique to compress N fine-tuned models into a single model, and take the single model as the final desired question-answer reading comprehension model.

A specific workflow of the apparatus embodiment shown in FIG. 3 will not be detailed any more here, and reference may be made to corresponding depictions in the above method embodiment.

To sum up, according to the solution of the apparatus embodiment of the present disclosure, the problem about the singularity of model structure is avoided by employing models with different structures for pre-training. In the fine-tuning phase, in addition to the question-answer reading comprehension task, other natural language processing tasks are added as secondary tasks, which enriches the training tasks, uses more training data and thereby enables the finally-obtained question-answer reading comprehension model to learn more universal features and improves the generalization capability of the model; in addition, during the pre-training phase, unsupervised training data from different fields may be used to pre-train the model, thereby enriching the data sources and enhancing the field adaptability of the model. In addition, since the pre-training requires a large computational cost and time consumption, it is difficult for training data to fully cover all fields. To make up for the uncovered data fields in the pre-training phase, further deep pre-training may be performed for the pre-trained models purposefully in several fields, thereby further enhancing the adaptability of the model in these fields.

According to an embodiment of the present disclosure, the present disclosure further provides an electronic device and a readable storage medium.

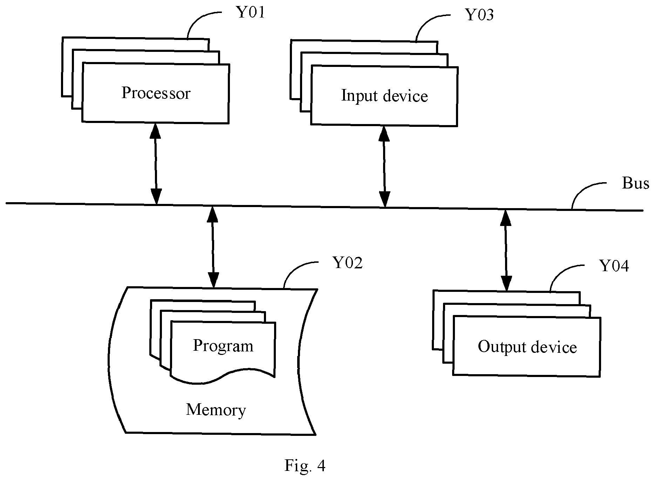

As shown in Fig. 4, it shows a block diagram of an electronic device for implementing the method according to embodiments of the present disclosure. The electronic device is intended to represent various forms of digital computers, such as laptops, desktops, workstations, personal digital assistants, servers, blade servers, mainframes, and other appropriate computers. The electronic device is further intended to represent various forms of mobile devices, such as personal digital assistants, cellular telephones, smartphones, wearable devices and other similar computing devices. The components shown here, their connections and relationships, and their functions, are meant to be exemplary only, and are not meant to limit implementations of the inventions described and/or claimed in the text here.

As shown in Fig, 4, the electronic device comprises: one or more processors Y01, a memory Y02, and interfaces connected to components and including a high-speed interface and a low speed interface. Each of the components are interconnected using various busses, and may be mounted on a common motherboard or in other manners as appropriate. The processor can process instructions for execution within the electronic device, including instructions stored in the memory or on the storage device to display graphical information for a GUI on an external input/output device, such as display coupled to the interface. In other implementations, multiple processors and/or multiple buses may be used, as appropriate, along with multiple memories and types of memory. Also, multiple electronic devices may be connected, with each device providing portions of the necessary operations (e.g., as a server bank, a group of blade servers, or a multi-processor system). One processor Y01 is taken as an example in Fig. 4.

The memory Y02 is a non-transitory computer-readable storage medium provided by the present disclosure. Wherein, the memory stores instructions executable by at least one processor, so that the at least one processor executes the method provided in the present disclosure. The non-transitory computer-readable storage medium of the present disclosure stores computer instructions, which are used to cause a computer to execute the method provided by the present disclosure.

The memory Y02 is a non-transitory computer-readable storage medium and can be used to store non-transitory software programs, non-transitory computer executable programs and modules, such as program instructions/modules corresponding to the method in the embodiments of the present disclosure (for example, xx module X01, xx module x02 and xx module x03 as shown in Fig. X). The processor Y01 executes various functional applications and data processing of the server, i.e., implements the method stated in the above method embodiments, by running the non-transitory software programs, instructions and modules stored in the memory Y02.

The memory Y02 may include a storage program region and a storage data region, wherein the storage program region may store an operating system and an application program needed by at least one function; the storage data region may store data created according to the use of the electronic device, and the like. In addition, the memory Y02 may include a high-speed random access memory, and may also include a non-transitory memory, such as at least one magnetic disk storage device, a flash memory device, or other non-transitory solid-state storage device. In some embodiments, the memory Y02 may optionally include a memory remotely arranged relative to the processor Y01, and these remote memories may be connected to the electronic device through a network. Examples of the above network include, but are not limited to, the Internet, an intranet, a local area network, a mobile communication network, and combinations thereof.

The electronic device may further include an input device Y03 and an output device Y04. The processor Y01, the memory Y02, the input device Y03 and the output device Y04 may be connected through a bus or in other manners. In FIG. 4, the connection through the bus is taken as an example.

The input device Y03 may receive inputted numeric or character information and generate key signal inputs related to user settings and function control of the electronic device, and may be an input device such as a touch screen, keypad, mouse, trackpad, touchpad, pointing stick, one or more mouse buttons, trackball and joystick. The output device Y04 may include a display device, an auxiliary lighting device, a haptic feedback device (for example, a vibration motor), etc. The display device may include, but is not limited to, a liquid crystal display, a light emitting diode display, and a plasma display. In some embodiments, the display device may be a touch screen.

Various implementations of the systems and techniques described here may be realized in digital electronic circuitry, integrated circuitry, specially designed ASICs (application specific integrated circuits), computer hardware, firmware, software, and/or combinations thereof. These various implementations may include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and may be implemented in a high-level procedural and/or object-oriented programming language, and/or in assembly/machine language. As used herein, the terms "machine-readable medium" and "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here may be implemented on a computer having a display device (e.g., a CRT (cathode ray tube) or LCD (liquid crystal display) monitor) for displaying information to the user and a keyboard and a pointing device (e.g., a mouse or a trackball) by which the user may provide input to the computer. Other kinds of devices may be used to provide for interaction with a user as well; for example, feedback provided to the user may be any form of sensory feedback (e.g., visual feedback, auditory feedback, or tactile feedback); and input from the user may be received in any form, including acoustic, speech, or tactile input.

The systems and techniques described here may be implemented in a computing system that includes a back end component (e.g., as a data server), or that includes a middleware component (e.g., an application server), or that includes a front end component (e.g., a client computer having a graphical user interface or a Web browser through which a user may interact with an implementation of the systems and techniques described here), or any combination of such back end, middleware, or front end components. The components of the system may be interconnected by any form or medium of digital data communication (e.g., a communication network). Examples of communication networks include a local area network ("LAN"), a wide area network ("WAN"), and the Internet.

The computing system may include clients and servers. A client and server are generally remote from each other and typically interact through a communication network. The relationship of client and server arises by virtue of computer programs running on the respective computers and having a client-server relationship to each other.

It should be understood that the various forms of processes shown above can be used to reorder, add, or delete steps. For example, the steps described in the present disclosure can be performed in parallel, sequentially, or in different orders as long as the desired results of the technical solutions disclosed in the present disclosure can be achieved, which is not limited herein.

The foregoing specific implementations do not constitute a limitation on the protection scope of the present disclosure. It should be understood by those skilled in the art that various modifications, combinations, sub-combinations and substitutions can be made according to design requirements and other factors. Any modification, equivalent replacement and improvement made within the spirit and principle of the present disclosure shall be included in the protection scope of the present disclosure.

## Claims

1. A method for obtaining a question-answer reading comprehension model, wherein the method comprises:
pre-training N models with different structures respectively with unsupervised training data to obtain N pre-trained models, different models respectively corresponding to different pre-training tasks, N being a positive integer greater than one;
fine-tuning the pre-trained models with supervised training data by taking a question-answer reading comprehension task as a primary task and taking predetermined other natural language processing tasks as secondary tasks, respectively, to obtain N fine-tuned models;
determining the question-answer reading comprehension model according to the N fine-tuned models.

2. The method according to claim 1, wherein
the pre-training with unsupervised training data respectively comprises:
pre-training any model with unsupervised training data from at least two different predetermined fields, respectively.

3. The method according to claim 1, wherein
the method further comprises:
for any pre-trained model, performing deep pre-training for the pre-trained model with unsupervised training data from at least one predetermined field according to a training task corresponding to the pre-trained model to obtain an enhanced pre-trained model;
wherein the unsupervised training data used upon the deep pre-training and the unsupervised training data used upon the pre-training come from different fields.

4. The method according to claim 1, wherein
the fine-turning comprises:
for any pre-trained model, in each step of the fine-tuning, selecting a task from the primary task and the secondary tasks for training, and updating the model parameters;
wherein the primary task is selected more times than any of the secondary tasks.

5. The method according to claim 1, wherein
the determining the question-answer reading comprehension model according to the N fine-tuned models comprises:
using a knowledge distillation technique to compress the N fine-tuned models into a single model, and taking the single model as the question-answer reading comprehension model.

6. An apparatus for obtaining a question-answer reading comprehension model, wherein the apparatus comprises: a first pre-training unit, a fine-tuning unit and a fusion unit;
the first pre-training unit being configured to pre-train N models with different structures respectively with unsupervised training data to obtain N pre-trained models, different models respectively corresponding to different pre-training tasks, N being a positive integer greater than one;
the fine-tuning unit being configured to fine-tune the pre-trained models with supervised training data by taking a question-answer reading comprehension task as a primary task and taking predetermined other natural language processing tasks as secondary tasks, respectively, to obtain N fine-tuned models;
the fusion unit being configured to determine the question-answer reading comprehension model according to the N fine-tuned models.

7. The apparatus according to claim 6, wherein
the first pre-training unit pre-trains any model with unsupervised training data from at least two different predetermined fields, respectively.

8. The apparatus according to claim 6, wherein
the apparatus further comprises: a second pre-training unit;
the second pre-training unit being configured to, for any pre-trained model, perform deep pre-training for the pre-trained model with unsupervised training data from at least one predetermined field according to a training task corresponding to the pre-trained model to obtain an enhanced pre-trained model; wherein the unsupervised training data used upon the deep pre-training and the unsupervised training data used upon the pre-training come from different fields.

9. The apparatus according to claim 6, wherein
for any pre-trained model, the fine-tuning unit, in each step of the fine-tuning, selecting a task from the primary task and the secondary tasks for training, and updating the model parameters, wherein the primary task is selected more times than any of the secondary tasks.

10. The apparatus according to claim 6, wherein
the fusion unit using a knowledge distillation technique to compress the N fine-tuned models into a single model, and takes the single model as the question-answer reading comprehension model.

11. A non-transitory computer-readable storage medium storing computer instructions therein, wherein the computer instructions cause the computer to perform the method according to any of claims 1-5.
